# EUROPÄISCHE PATENTSCHRIFT

(11) **EP 1 642 422 B1**
(45) Veröffentlichungstag und Bekanntmachung des Hinweises auf die Patenterteilung: **06.12.2006**
(21) Anmeldenummer: 04740005.6
(22) Anmeldetag: 17.06.2004
(51) Int. Cl.: H04L 12/40, H04L 29/08

(54) **ANPASSUNG EINES FAHRZEUGNETZWERKS AN GEÄNDERTE ANFORDERUNGEN**
ADAPTATION OF A VEHICLE NETWORK TO MODIFIED REQUIREMENTS
ADAPTATION D'UN RESEAU EMBARQUE DANS UN VEHICULE A DES EXIGENCES MODIFIEES

(30) Priorität: 26.06.2003 DE 10328917
(43) Veröffentlichungstag der Anmeldung: 05.04.2006
(73) Patentinhaber: Volkswagen AG, 38436 Wolfsburg (DE)
(72) Erfinder: HOPPMANN, Michael, 38176 Wendeburg (DE); KRÖMKE, Carsten, 38126 Braunschweig (DE); HOFFMANN, Christoph, 38446 Wolfsburg (DE)
(74) Vertreter: Effert, Bressel und Kollegen
(86) Internationale Anmeldenummer: PCT/EP2004/006546
(87) Internationale Veröffentlichungsnummer: WO 2005/002144

(56) Entgegenhaltungen:
- EP-A- 1 259 031
- WO-A-02/10903
- DE-A- 10 129 446
- US-A1- 2003 043 739

## Beschreibung

Die Erfindung betrifft ein Fahrzeugnetzwerk gemäß dem Oberbegriff des Patentanspruchs 1, ein hierfür geeignetes Steuergerät sowie ein Verfahren zur Kommunikation in einem derartigen Fahrzeugnetzwerk.

In modernen Kraftfahrzeugen nimmt die Anzahl von Steuergeräten kontinuierlich zu. Dabei sind jeweils verschiedene Steuergeräte zu einem Fahrzeugnetzwerk zusammengefasst, die über ein Bussystem miteinander kommunizieren. Verschiedene Fahrzeugnetzwerke können dann wieder über Gateways miteinander verbunden werden, so dass auch Daten von den einzelnen Fahrzeugnetzwerken ausgetauscht werden können. Beispiele für derartige Fahrzeugnetzwerke sind CAN-, LIN- oder MOST-Bussysteme. Insbesondere bei allen ereignisgesteuerten Bussystemen ist eine eindeutige Zuordnung des sendenden Steuergerätes notwendig. Hierzu überträgt ein sendendes Steuergerät mindestens eine Daten-Botschaft, die einen Datenheader und einen Dateninhalt umfasst sowie gegebenenfalls weitere Kontroll-Bits, die hier jedoch nicht weiter betrachtet werden sollen. Dabei umfasst der Datenheader einen Identifier, der das sendende Steuergerät eindeutig identifiziert. Darüber hinaus ist der Bedeutungsinhalt des nachfolgenden Dateninhalts vorab festgelegt. Somit weiß ein empfangendes Steuergerät genau, ob die Daten-Botschaft für ihn bestimmt ist und wie es den Dateninhalt zu interpretieren hat. Beispielsweise ist das erste Byte des Dateninhaltes einer Daten-Botschaft eines Motorsteuergerätes die Drehzahl, das zweite Byte eine Einspritzmenge und das dritte Byte Statussignale verschiedener Sensoren, wobei das Motorsteuergerät eine Vielzahl unterschiedlicher Daten-Botschaften sendet. Die sendenden und empfangenden Steuergeräte sind also genau aufeinander abgestimmt. In einer nächsten Entwicklungsstufe können dann die Dateninhalte neu festgelegt werden, wobei im Regelfall die ldentifier erhalten bleiben. Eine derartige Festlegung wird auch als Fahrzeugnetzwerk-Version bezeichnet. Zur Erreichung möglichst großer Stückzahlen wird dabei versucht, wenigstens einige Steuergeräte modellübergreifend einzusetzen. Dies führt jedoch zu Problemen, wenn aufgrund bestimmter Vorgaben an einem Modell Änderungen vorgenommen werden müssen. In diesem Fall muss eine neue Fahrzeugnetzwerk-Version festgelegt werden. Entsprechend müssen auch alle betroffenen Steuergeräte umprogrammiert werden. Insbesondere hinsichtlich der vorzuhaltenden Ersatzteile stellt dies sowohl ein finanzielles als auch logistisches Problem dar.

Aus der US 2003/0043739 A1 ist ein Fahrzeugnetzwerk bekannt, umfassend mindestens zwei Steuergeräte, die miteinander Daten-Botschaften austauschen, wobei die Dateninhalte innerhalb der Daten-Botschaft vorab definiert sind, so dass ein Daten-Botschaften empfangendes Steuergerät anhand der Position eines Dateninhaltes innerhalb der Daten-Botschaft auf dessen Bedeutungsinhalt schließen kann.

Der Erfindung liegt daher das technische Problem zugrunde, ein Fahrzeugnetzwerk, ein hierfür geeignetes Steuergerät sowie ein Verfahren zur Kommunikation zur Verfügung zu stellen, wodurch eine flexiblere Anpassung an geänderte Anforderungen möglich ist.

Die Lösung des technischen Problems ergibt sich durch die Gegenstände mit den Merkmalen der Patentansprüche 1, 8 und 9. Weitere vorteilhafte Ausgestaltungen der Erfindung ergeben sich aus den Unteransprüchen.

Hierzu sendet mindestens ein sendendes Steuergerät innerhalb mindestens einer Daten-Botschaft eine ihm zugeordnete. Fahrzeugnetzwerk-Version als Dateninhalt, wobei das empfangende Steuergerät die übermittelte Fahrzeugnetzwerk-Version erfasst und den übrigen Dateninhalten der Daten-Botschaft bzw. Botschaften einen der FahrzeugnetzVersion des sendenden Steuergerätes zugeordneten Bedeutungsinhalt zuordnet. Hierdurch ist ein flexibler Mischverbau von Steuergeräten mit unterschiedlichen Fahrzeugnetzwerk-Versionen möglich. Muss beispielsweise ein empfangendes Steuergerät ausgetauscht werden, weil es defekt ist, so kann das aktuellste Steuergerät hinsichtlich der Fahrzeugnetzwerk-Version eingebaut werden, da diese abwärtskompatibel sind. So erkennt beispielsweise das empfangende Steuergerät, dass die sendenden Steuergeräte eine niedrige Fahrzeugnetzwerk-Version aufweisen und ordnet den Dateninhalten den alten Bedeutungsinhalt zu, wobei gegebenenfalls erweiterte Funktionen des empfangenden Steuergerätes aufgrund der höheren Fahrzeugnetzwerk-Version softwaretechnisch gesperrt bzw. verriegelt werden. Ebenso ist es denkbar, dass nur ein Kraftfahrzeug-Modell ein sendendes Steuergerät mit höherer Netzwerkversion erhält, so dass hier bestimmte Funktionalitäten realisierbar sind, die bei den anderen Modellen nicht benötigt werden bzw. nur in Abhängigkeit von der Ausstattung freigeschaltet werden sollen oder nicht. Somit kann jeweils das gleiche empfangende Steuergerät für alle Modelle und alle Fahrzeugnetzwerk-Versionen verwendet werden.

Der Vorteil, die Fahrzeugnetzwerk-Version in den Dateninhalt zu integrieren, ist, dass die Datenheader oder Kontroll-Bits nicht geändert werden müssen. Prinzipiell ist aber auch eine Integration in die Datenheader möglich, was jedoch einen erhöhten Umstellungsaufwand zur Folge hätte.

In einer bevorzugten Ausführungsform erfolgt im empfangenden Steuergerät ein kleiner/gleich - Vergleich mit einer Fahrzeugnetzwerk-Version, wobei je Ergebnis des Vergleichs dem Dateninhalt ein bestimmter Bedeutungsinhalt zugeordnet ist.

In einer weiteren bevorzugten Ausführungsform sind nur bestimmte Dateninhalte bzw. Daten-Botschaften in Abhängigkeit von der Fahrzeugnetzwerk-Version veränderbar. Hierdurch sind zwar die Änderungsmöglichkeiten beschränkt, jedoch existiert somit auch eine größere Sicherheit, da bestimmte Dateninhalte unabhängig von der Netzwerk-Version stets an gleicher Stelle angeordnet sind. Dies ermöglicht auch den Einsatz eines sendenden Steuergerätes mit einer höheren Fahrzeugnetzwerk-Version als die des empfangenden Steuergerätes, da dieses dann zumindest die nicht veränderbaren Dateninhalte weiter verarbeiten kann.

In einer weiteren bevorzugten Ausführungsform wird bei einer empfangenen Fahrzeugnetzwerk-Version größer oder größer/gleich einer vorgegebenen Fahrzeugnetzwerk-Version durch das empfangende Steuergerät eine Standard-Nachricht auf einer Anzeigeeinheit generiert, beispielsweise "Bitte setzen Sie sich mit dem Kundendienst in Verbindung".

In einer weiteren bevorzugten Ausführungsform ist das empfangende Steuergerät als Kombi-Instrument ausgebildet.

In einer weiteren bevorzugten Ausführungsform ist das sendende Steuergerät als Motor- und/oder Getriebesteuergerät ausgebildet.

Das Fahrzeugnetzwerk ist vorzugsweise als CAN-Bussystem ausgebildet.

Die Erfindung wird nachfolgend anhand eines bevorzugten Ausführungsbeispieles näher erläutert. Die Fig. zeigen:
- Fig. 1: ein schematisches Blockschaltbild eines Teil-Fahrzeugnetzwerkes und
- Fig. 2: eine schematische Darstellung einer Daten-Botschaft.

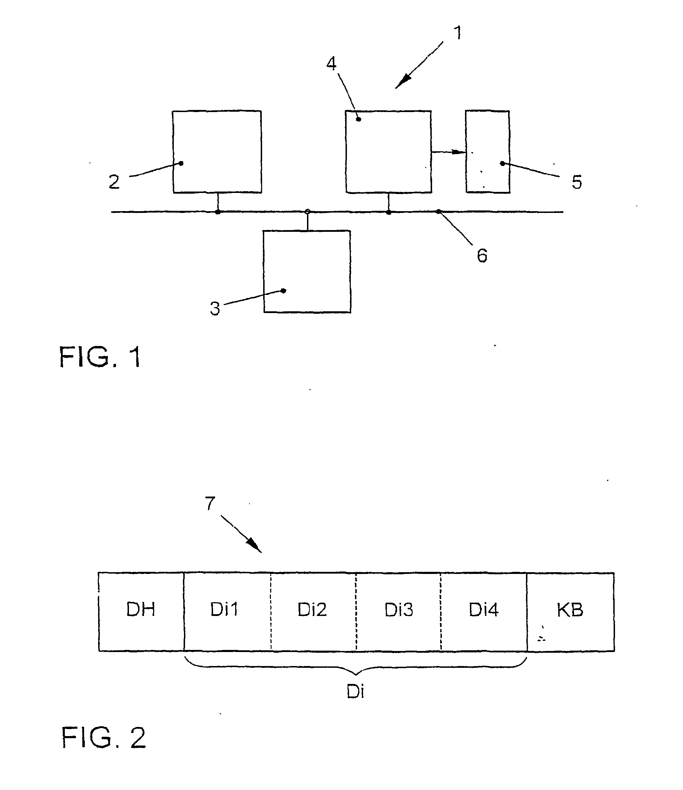

In der Fig. 1 ist ein Teil eines Fahrzeugnetzwerkes 1 dargestellt, umfassend ein Motorsteuergerät 2, ein Getriebesteuergerät 3 und ein Kombiinstrument 4, das mit einer Anzeigeeinheit 5 verbunden ist. Die Steuergeräte 2 - 4 sind alle über einen Bus 6 miteinander verbunden, wobei angenommen werden soll, dass die Kommunikation nach dem CAN-Protokoll erfolgt. Eine schematisch stark vereinfachte Struktur der Daten-Botschaften 7 ist in Fig. 2 dargestellt. Die Daten-Botschaft 7 umfasst einen Datenheader DH, einen Dateninhalt DI und Kontroll-Bits KB. Der Dateninhalt DI setzt sich dabei beispielsweise aus vier Blocks D11 - D14 zusammen. Dabei ist der Bedeutungsinhalt der Blocks D11 - D13 unabhängig von der Fahrzeugnetzwerk-Version immer gleich. In dem vierten Block DI4 wird dann eine Fahrzeugnetzwerk-Version sowie weitere Bits oder Bytes übertragen, wobei sich deren Bedeutungsinhalt je nach Fahrzeugnetzwerk-Version verändern kann.

Dabei sei zunächst angenommen, dass alle drei Steuergeräte 2 - 4 der gleichen Fahrzeugnetzwerk-Version n angehören. Das Motorsteuergerät 2 und das Getriebesteuergerät 3 übertragen dann jeweils im vierten Datenblock D14 ihre Fahrzeugnetzwerk-Version n sowie Daten XYZ, deren Bedeutungsinhalt dem KombiInstrument 4 bekannt ist. Sei nun weiter unterstellt, dass sich bis zur Fahrzeugnetzwerk-Version n nichts am Bedeutungsinhalt der Daten XYZ geändert hat. In diesem Fall ist das Kombi-Instrument 4 mit einer Prüfsoftware ausgebildet, die einen kleiner/gleich-Vergleich der empfangenen Fahrzeugnetzwerk-Version mit seiner eigenen vornimmt. Solange die empfangene Fahrzeugnetzversion ≤ n ist, kennt das Kombiinstrument den Bedeutungsinhalt und kann entsprechende Ansteuerungen vornehmen. Sei weiter unterstellt, dass zwischenzeitlich neue Fahrzeugnetzwerk-Versionen n+1 sowie n+2 entwickelt wurden, wobei sich jeweils die Bedeutungsinhalte der Daten in X' Y' Z' sowie X" Y" Z" geändert haben. Entsprechend hat sich auch der Aufbau und/oder die Steuersoftware des Kombi-Instrumentes 4 der Fahrzeugnetzwerk-Versionen n+1 bzw. n+2 gegenüber n verändert, wobei diese jedoch abwärtskompatibel ausgebildet sind.

Wird dann zu Reparaturzwecken ein Kombi-Instrument 4 der Version n+2 eingesetzt, so führt das Kombi-Instrument während des Betriebes folgende Abfrage und Zuordnung durch:
empfangene Version ≤ n → X Y Z
empfangene Version = n+1 → X' Y' Z'
empfangene Version = n+2 → X" Y" Z"
empfangene Version > n+2 → ?

Mit Ausnahme des letzten Falles weiß das Kombi-Instrument 4 daher jeweils den Bedeutungsinhalt zu deuten und kann die entsprechende Ansteuerung vornehmen. Dabei verhält sich das Kombi-Instrument 4 jeweils wie ein Kombi-Instrument mit der empfangenen Version, wobei gegebenenfalls erweiterte Funktionen des Kombi-Instrumentes 4, die bei den niedrigen Versions-Nummern nicht benötigt werden, gesperrt werden. Um den letzten Fall in einen definierten Zustand zu überführen, gibt es prinzipiell zwei Lösungsmöglichkeiten, nämlich eine Standardanzeige auf der Anzeigeeinheit oder eine Anpassung der Programmierung des Kombi-Instrumentes. Somit kann immer das Kombi-Instrument mit der höchsten Versions-Nummer verbaut werden, so dass jeweils nur ein Kombi-Instrument 4 gefertigt und als Ersatzteil vorgehalten werden muss. Gleiches gilt mit Einschränkungen auch für die sendenden Steuergeräte.

## Patentansprüche

1. Fahrzeugnetzwerk, umfassend mindestens zwei Steuergeräte, die miteinander Daten-Botschaften austauschen, wobei die Dateninhalte innerhalb der Daten-Botschaft vorab definiert sind, so dass ein Daten-Botschaften empfangendes Steuergerät anhand der Position eines Dateninhaltes innerhalb der Daten-Botschaft auf dessen Bedeutungsinhalt schließen kann,
**dadurch gekennzeichnet, dass**
mindestens ein sendendes Steuergerät mindestens innerhalb einer Daten-Botschaft (7) eine ihm zugeordnete Fahrzeugnetzwerk-Version als Dateninhalt übermittelt und das empfangende Steuergerät die übermittelte Fahrzeugnetzwerk-Version erfasst und den übrigen Dateninhalten (D1) der Daten-Botschaft (7) bzw. Botschaften einen der Fahrzeugnetzwerk-Version des sendenden Steuergerätes zugeordneten Bedeutungsinhalt zuordnet.

2. Fahrzeugnetzwerk nach Anspruch 1, **dadurch gekennzeichnet, dass** im empfangenden Steuergerät ein kleiner/gleich-Vergleich mit einer Fahrzeugnetzwerk-Version erfolgt, wobei je nach Ergebnis des Vergleiches dem Dateninhalt (DI) ein bestimmter Bedeutungsinhalt zugeordnet ist.

3. Fahrzeugnetzwerk nach Anspruch 1 oder 2, **dadurch gekennzeichnet, dass** nur bestimmte Dateninhalte (D14) bzw. Daten-Botschaften abhängig von der Fahrzeugnetzwerk-Version sind.

4. Fahrzeugnetzwerk nach einem der vorangegangenen Ansprüche, **dadurch gekennzeichnet, dass** bei einer empfangenen Fahrzeugnetzwerk-Version größer oder größer/gleich einer vorgegebenen Fahrzeugnetzwerk-Version das empfangende Steuergerät eine Standard-Nachricht auf einer Anzeigeeinheit (5) generiert.

5. Fahrzeugnetzwerk nach einem der vorangegangenen Ansprüche, **dadurch gekennzeichnet, dass** das empfangende Steuergerät als Kombi-Instrument (4) ausgebildet ist.

6. Fahrzeugnetzwerk nach einem der vorangegangenen Ansprüche, **dadurch gekennzeichnet, dass** das sendende Steuergerät als Motor- und/oder Getriebesteuergerät (2,3) ausgebildet ist.

7. Fahrzeugnetzwerk nach einem der vorangegangenen Ansprüche, **dadurch gekennzeichnet, dass** das Fahrzeugnetzwerk als CAN-Bussystem ausgebildet ist.

8. Steuergerät für ein Fahrzeugnetzwerk nach einem der vorangegangenen Ansprüche, **dadurch gekennzeichnet, dass** es Mittel hat zum Erfassen einer übermittelten Fahrzeugnetzwerkversion innerhalb einer empfangenen Daten-Botschaft (7) und Mittel welche den übrigen Dateninhalten (D1) der Daten-Botschaft (7) bzw. Botschaften einen der erfassten Fahrzeugnetzwerk-Version zugeordneten Bedeutungsinhalt zuordnen.

9. Verfahren zur Kommunikation in einem Fahrzeugnetzwerk nach Anspruch 1, **dadurch gekennzeichnet, dass** mindestens ein sendendes Steuergerät innerhalb einer Daten-Botschaft (7) eine ihm zugeordnete Fahrzeugnetzwerk-Version als Dateninhalt (DI) übermittelt und das empfangende Steuergerät die übermittelte Fahrzeugnetzwerk-Version erfasst und den übrigen Dateninhalten (DI) der Daten-Botschaft (7) bzw. Botschaften einen der Fahrzeugnetzwerk-Version des sendenden Steuergerätes zugeordneten Bedeutungsinhalt zuordnet.

10. Verfahren nach Anspruch 9, **dadurch gekennzeichnet, dass** im empfangenden Steuergerät ein kleiner/gleich-Vergleich mit einer Fahrzeugnetzwerk-Version erfolgt, wobei je nach Ergebnis des Vergleiches dem Dateninhalt (DI) ein bestimmter Bedeutungsinhalt zugeordnet ist.

11. Verfahren nach Anspruch 9 oder 10, **dadurch gekennzeichnet, dass** nur bestimmte Dateninhalte (D14) bzw. Daten-Botschaften(7) von der Fahrzeugnetzwerk-Version abhängig sind.

12. Verfahren nach einem der Ansprüche 9 bis 11, **dadurch gekennzeichnet, dass** bei einer empfangenen Fahrzeugnetzwerk-Version größer oder größer/gleich einer vorgegebenen Fahrzeugnetzwerk-Version das empfangende Steuergerät eine Standard-Nachricht auf einer Anzeigeeinheit (5) generiert.

## Claims

1. Vehicle network comprising at least two control units which exchange data messages with one another, the data contents within the data message being defined in advance so that a control unit which receives data messages can determine its meaning from the position of a data content within the data message, **characterized in that** at least one transmitting control unit within at least one data message (7) transmits a vehicle network version, assigned to it, as data content and the receiving control unit registers the transmitted vehicle network version and assigns to the other data contents (DI) of the data message (7) or messages a meaning which is assigned to the vehicle network version of the transmitting control unit.

2. Vehicle network according to Claim 1, **characterized in that** a smaller than or equal to comparison is carried out with a vehicle network version in the receiving control unit, a specific meaning being assigned to the data content (DI) depending on the result of the comparison.

3. Vehicle network according to Claim 1 or 2, **characterized in that** only specific data contents (DI4) or data messages are dependent on the vehicle network version.

4. Vehicle network according to one of the preceding claims, **characterized in that** in the case of a received vehicle network version which is greater than or equal to a predefined vehicle network version the receiving control unit generates a standard message on a display unit (5).

5. Vehicle network according to one of the preceding claims, **characterized in that** the receiving control unit is embodied as a combination instrument (4).

6. Vehicle network according to one of the preceding claims, **characterized in that** the transmitting control unit is embodied as an engine control unit and/or gearbox control unit (2, 3).

7. Vehicle network according to one of the preceding claims, **characterized in that** the vehicle network is embodied as a CAN bus system.

8. Control unit for a vehicle network according to one of the preceding claims, **characterized in that** it has means for registering a transmitted vehicle network version within a received data message (7) and means which assign to the other data contents (DI) of the data message (7) or messages a meaning which is assigned to the registered vehicle network version.

9. Method for communicating in a vehicle network according to Claim 1, **characterized in that** at least one transmitting control unit within a data message (7) transmits a vehicle network version, assigned to it, as data content (DI) and the receiving control unit registers the transmitted vehicle network version and assigns to the other data contents (DI) of the data message (7) or messages a meaning which is assigned to the vehicle network version of the transmitting control unit.

10. Method according to Claim 9, **characterized in that** a smaller than or equal to comparison is carried out with a vehicle network version in the receiving control unit, a specific meaning being assigned to the data content (DI) depending on the result of the comparison.

11. Method according to Claim 9 or 10, **characterized in that** only specific data contents (DI4) or data messages (7) are dependent on the vehicle network version.

12. Method according to one of Claims 9 to 11, **characterized in that** in the case of a received vehicle network version which is greater than or equal to a predefined vehicle network version the receiving control unit generates a standard message on a display unit (5).

## Revendications

1. Réseau de véhicule comprenant au moins deux appareils de commande qui échangent entre eux des messages de données, les données contenues au sein du message de données étant définies à l'avance de sorte qu'un appareil de commande qui reçoit des messages de données puisse déduire l'importance de son contenu au moyen de la position des données contenues au sein du message de données, **caractérisé en ce qu'**au moins un appareil de commande émetteur communique au moins à l'intérieur d'un message de données (7) en tant que données contenues une version de réseau de véhicule qui lui est affectée et l'appareil de commande récepteur détecte la version de réseau de véhicule communiquée et affecte au reste des données contenues (DI) du message de données (7) ou des messages une importance de contenu associée à la version de réseau de véhicule de l'appareil de commande émetteur.

2. Réseau de véhicule selon la revendication 1, **caractérisé en ce qu'**une comparaison de type inférieure/égale avec une version de réseau de véhicule a lieu dans l'appareil de commande récepteur, une importance de contenu donnée étant affectée aux données contenues (DI) en fonction du résultat de la comparaison.

3. Réseau de véhicule selon la revendication 1 ou 2, **caractérisé en ce que** seules certaines données contenues (DI4) ou certains messages de données sont dépendants de la version de réseau de véhicule.

4. Réseau de véhicule selon l'une des revendications précédentes, **caractérisé en ce que** lorsque la version de réseau de véhicule reçue est supérieure ou supérieure/égale à une version de réseau de véhicule prédéfinie, l'appareil de commande récepteur génère un message standard sur une unité d'affichage (5).

5. Réseau de véhicule selon l'une des revendications précédentes, **caractérisé en ce que** l'appareil de commande récepteur est réalisé sous la forme d'un instrument combiné (4).

6. Réseau de véhicule selon l'une des revendications précédentes, **caractérisé en ce que** l'appareil de commande émetteur est réalisé sous la forme d'un appareil de commande de moteur et/ou de transmission (2, 3).

7. Réseau de véhicule selon l'une des revendications précédentes, **caractérisé en ce que** le réseau de véhicule est réalisé sous la forme d'un système à bus CAN.

8. Appareil de commande pour un réseau de véhicule selon l'une des revendications précédentes, **caractérisé en ce qu'**il possède des moyens pour détecter une version de réseau de véhicule communiquée à l'intérieur d'un message de données (7) reçu et des moyens qui affectent une importance de contenu associée à la version de réseau de véhicule détectée aux autres données contenues (DI) du message de données (7) ou des messages.

9. Procédé de communication dans un réseau de véhicule selon la revendication 1, **caractérisé en ce qu'**au moins un appareil de commande émetteur communique sous la forme de données contenues (DI) à l'intérieur d'un message de données (7) une version de réseau de véhicule qui lui est associée et l'appareil de commande récepteur détecte la version de réseau de véhicule communiquée et affecte une importance de contenu associée à la version de réseau de véhicule détectée aux autres données contenues (DI) du message de données (7) ou des messages.

10. Procédé selon la revendication 9, **caractérisé en ce qu'**une comparaison de type inférieure/égale avec une version de réseau de véhicule a lieu dans l'appareil de commande récepteur, une importance de contenu donnée étant affectée aux données contenues (DI) en fonction du résultat de la comparaison.

11. Procédé selon la revendication 9 ou 10, **caractérisé en ce que** seules certaines données contenues (DI4) ou messages de données (7) sont dépendants de la version de réseau de véhicule.

12. Procédé selon l'une des revendications 9 à 11, **caractérisé en ce que** lorsque la version de réseau de véhicule reçue est supérieure ou supérieure/égale à une version de réseau de véhicule prédéfinie, l'appareil de commande récepteur génère un message standard sur une unité d'affichage (5).
